# EUROPÄISCHE PATENTSCHRIFT

(11) **EP 1 351 010 B1**
(45) Veröffentlichungstag und Bekanntmachung des Hinweises auf die Patenterteilung: **01.09.2004**
(21) Anmeldenummer: 02006822.7
(22) Anmeldetag: 25.03.2002
(51) Int. Cl.: F16L 59/00

(54) **Isolier-Rohranordnung und Verfahren zu ihrer Herstellung**
Insulation pipe arrangement and method for manufacturing the same
Arrangement de tuyaux isolants et procédé pour sa fabrication

(43) Veröffentlichungstag der Anmeldung: 08.10.2003
(73) Patentinhaber: Armacell Enterprise GmbH, 48153 Münster (DE)
(72) Erfinder: Weibel, Jürg P., 6332 Hagendorn (CH); Galliker, Valentin, 4710 Balsthal (CH); Flück, Urs, 4712 Laupersdorf (CH)
(74) Vertreter: Finck, Dieter, Dr.Ing.

(56) Entgegenhaltungen:
- EP-A- 0 428 368
- DE-A- 2 548 024
- DE-U- 29 923 057
- GB-A- 2 156 033

## Beschreibung

Die Erfindung betrifft eine Isolier-Rohranordnung, bestehend aus wenigstens zwei Rohrkörpern, von denen jeder ein inneres Fluidführungs-Rohr aufweist, das von einer Isolierschicht aus elastomerem oder thermoplastischen Schaumstoff umschlossen ist, wobei um die Isolierschicht eine Schutzfolie aus einem Thermoplast, Elastomer oder Duromer hoher Dichte angeordnet ist, sowie ein Verfahren zur Herstellung einer solchen Isolier-Rohranordnung.

Es ist bereits bekannt, zwei Rohrkörper, von denen jeder aus einem inneren Fluidführungs-Rohr aus Metall oder Kunststoff besteht, das außen von einem isolierenden Kunststoff umgeben ist, der seinerseits einen Außenmantel aus Polyethylen hat, längs einander in Axialrichtung gegenüberliegender Umfangsteile durch Wärmeeinwirkung miteinander zu verschweißen. Wenn eine solche von zwei Rohren gebildete Rohranordnung mit Anschlüssen verbunden werden muss, die eine Entfernung voneinander haben, die größer ist als der Abstand der Metallrohre der verschweißten Rohrkörper, wird die Verschweißungsnaht durch entsprechende Krafteinwirkung auf die beiden Rohrkörper gelöst. Bei einem solchen Aufreißen der Schweißnaht werden die die Außenschicht bildenden Polyethylenfolien beschädigt, sodass sie an den Umfangsteilen der vorherigen Verschweißung keine Schutzwirkung mehr bieten. Wenn die Schweißnaht zu weit geöffnet wird und deshalb wieder geschlossen werden muss, erfordert dies ein erneutes Verschweißen oder ein Verkleben, was sehr aufwändig ist.

Aus dem DE 299 23 057 U1 ist ein Leitungssystem zur Verrohrung von Anlagenkomponenten im Bereich der Heizungstechnik bekannt, bei welchem zwei flexible Metallrohre im Abstand voneinander in einem gemeinsamen Schaumstoffkörper mit ovalem oder elliptischen Querschnitt eingebettet sind, der außenseitig von einer Schutzfolie umgeben ist. Zwischen den beiden flexiblen Metallrohren ist in dem Isolierkörper eine Sollbruchstelle vorgesehen, die ein Auseinanderbrechen in Axialrichtung ermöglicht, damit die beiden Rohre an Anschlüsse angeschlossen werden können, deren Abstand größer ist als der der Rohre in dem ein Stück bildenden Isolierkörper. Eine Wiederverbindung der voneinander längs der Sollbruchstelle getrennten Einzelrohrkörper ist nur durch Auftragen von Klebstoff möglich.

Die der Erfindung zugrundeliegende Aufgabe besteht darin, die Rohranordnung der eingangs genannten Art so auszugestalten, dass die wenigstens zwei Rohrkörper problemlos voneinander getrennt und an der gleichen Stelle wieder verbunden werden können.

Diese Aufgabe wird ausgehend von der Isolier-Rohranordnung der eingangs genannten Art dadurch gelöst, dass die Rohrkörper auf gegenüberliegenden Umfangsteilen ihrer Schutzfolie durch eine Schicht eines Klebers verbunden sind, der ein Lösen der Haftverbindung ermöglicht, ohne dass die Schutzfolie beschädigt wird, und der nach einer Lösung der Haftverbindung bei erneutem Kontaktieren der Umfangsteile der vorherigen Haftverbindung eine erneute Haftverbindung herstellt.

Ein solcher Kleber ist zweckmäßigerweise ein Haftschmelzkleber, bevorzugt auf Acrylbasis, oder ein Kleber in Form eines thermoplastischen Kautschuks auf synthetischer Basis. Die Schutzfolie besteht zweckmäßigerweise aus Polyethylen, Polyvinylchlorid, Kautschuk oder anderen Thermoplasten. Die Rohrkörper können unterschiedliche oder gleiche Außendurchmesser haben.

Die Haftverbindung der beiden Rohrkörper bleibt auch dann bestehen, wenn die Isolier-Rohranordnung beispielsweise auf einer Trommel aufgewickelt oder in Ringform gelegt wird.

Die erfindungsgemäße Isolier-Rohranordnung lässt eine Trennung der beiden Rohrkörper voneinander an einem Ende der Rohranordnung zu, indem die Rohrkörper voneinander weggezogen werden. Die Lösung der Verbindung erfolgt im Bereich der Schicht des Klebers, ohne dass dadurch die Schutzfolien an den Umfangsteilen der Haftverbindung beschädigt werden. Die Beschaffenheit des Klebers erlaubt eine Wiederherstellung der Haftverbindung durch bloßes Gegeneinanderdrücken der Umfangsteile mit der Schicht des Klebers, die die vorherige Haftverbindung bildeten.

Die Herstellung einer solchen Isolier-Rohranordnung erfolgt nach einem Verfahren, bei welchem um jedes von wenigstens zwei kontinuierlich transportierten flexiblen bzw. leicht biegbaren inneren Rohren zur Fluidführung eine Isolierschicht aus einem elastomeren oder thermoplastischen Schaumstoff herumgelegt wird, in dem in Axialrichtung eine Öffnung gebildet ist oder gebildet wird. Die axiale Öffnung wird durch Zwischenlage eines Heißschmelzklebers zu einem Isolierschlauch geschlossen. Zur Bildung eines Rohrkörpers wird auf den Isolierschlauch eine Schutzfolie aus einem Thermoplast, Elastomer oder Duromer hoher Dichte, beispielsweise im Bereich von 200 bis 2000 kg/m³, aufextrudiert. Danach werden die Rohrkörper unter Zwischenlage einer Schicht eines Klebers zwischen gegenüberliegenden Umfangsteilen gegeneinandergeführt und miteinander längs der Umfangsteile der Schutzteile haftend verbunden. Die Haftverbindung wird durch voneinander Wegziehen der Rohrkörper ohne Beschädigung der Schutzfolie gelöst und bei erneutem Gegeneinanderdrücken der die vorherige Haftverbindung bildenden Umfangsteile wiederhergestellt.

Als innere flexible oder leicht biegbare Rohre werden dünne Metallrohre, wie Kupferrohre, Rohre aus Kunststoff oder Verbundrohre verwendet, beispielsweise aus Aluminium und Kunststoff. Der Schaumstoff kann in Form einer Platte, die um das Metallrohr herumgelegt und längs der axialen Öffnung verbunden wird, oder von einem Schlauch gebildet werden, der vor dem Herumlegen um das Metallrohr aufgeschnitten und nach dem Herumlegen um das Metallrohr durch Verkleben der Schnittflächen wieder zu einem Stück verbunden wird.

Anhand von Zeichnungen wird ein Ausführungsbeispiel der Erfindung näher erläutert. Es zeigt
Fig. 1 eine Ausführungsform einer Isolier-Rohranordung im Querschnitt und
Fig. 2 schematisch eine Vorrichtung zur Herstellung der Isolier-Rohranordnung von Fig. 1.

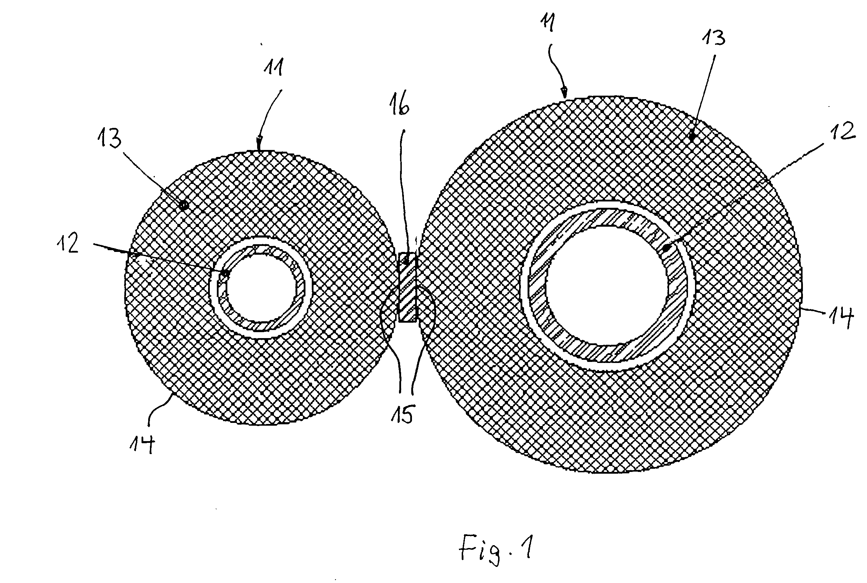

Die in Fig. 1 gezeigt Isolier-Rohranordnung besteht aus zwei Rohrkörpern 11. Jeder Rohrkörper 11 hat ein zentrales flexibles Metallrohr 12 für eine Fluidführung, beispielsweise ein Kupferrohr, für den Durchstrom eines heißen oder kalten Fluids. Um das Metallrohr 12 ist eine Isolierschicht 13 aus einem elastomeren oder thermoplastischen Schaumstoff angeordnet, die außen von einer Schutzfolie 14, beispielsweise einer Polyethylenfolie, umschlossen ist.

Die beiden Rohrkörper 11 sind auf gegenüberliegenden Umfangsteilen 15 ihrer Schutzfolien 14 durch eine Schicht 16 aus einem Kleber miteinander verbunden, der ein Haftschmelzkleber auf Acrylbasis oder auf der Basis eines thermoplastischen Kautschuks ist und der es erlaubt, die von ihm hergestellte Haftverbindung der Umfangsteile 15 durch Auseinanderziehen der Rohrkörper 11 zu lösen, ohne die Schutzfolie 14 zu beschädigen, der bei erneutem Kontaktieren dieser Umfangsteile 15 die vorherige Haftverbindung wiederherstellt, und dessen Haftverbindung bei einem Aufwickeln der Rohranordnung auf eine Trommel oder beim Legen in Ringschlaufen bestehen bleibt.

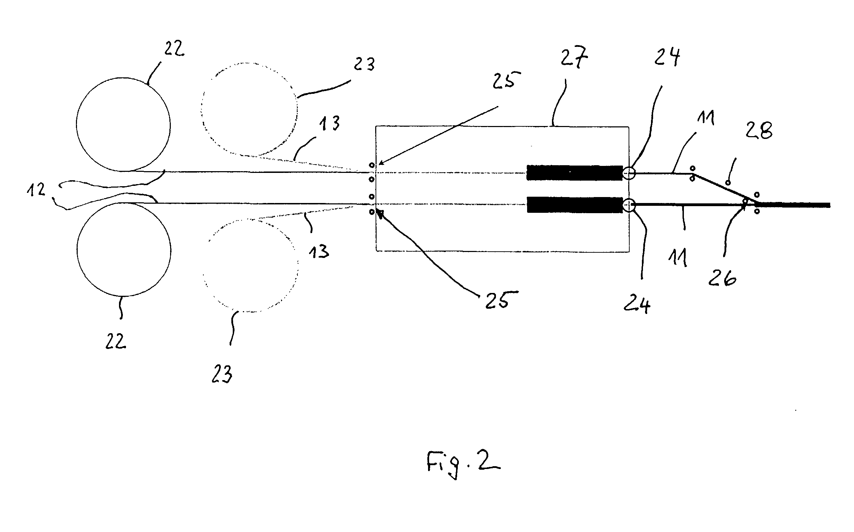

Für die Herstellung einer solchen Isolier-Rohranordnung eignet sich die in Fig. 2 gezeigte Vorrichtung bei welcher von zwei Wickeltrommeln 22 jeweils ein Strang 12 eines Metallrohrs abgezogen und kontinuierlich einer Stelle 25 zugeführt wird, an der um jedes Metallrohr 12 eine von einer Trommel 23 abgezogene Isolierschicht 13 in Form eines Schlauchs axial in Längsrichtung aufgeschnitten, um das Metallrohr 12 herumgelegt und nach Aufbringen eines Heißschmelzklebers auf die Schnittflächen wieder verklebt wird. Die Verklebung wird in einer Aushärteeinrichtung 27 fixiert, wonach auf die auf das Metallrohr 12 aufgebrachte Isolierschicht 13 mit Hilfe von Extrudern 24 eine Schutzfolie 14 aus Polyethylen auf- bzw. coextrudiert wird. Anschließend werden die so gebildeten Rohrkörper 11 mit Hilfe von Führungselementen 28 gegeneinandergeführt, wobei an einer Stelle 26 auf gegenüberliegende Umfangsteile 15 der Schutzfolie 14 ein Haftschmelzkleber auf Acrylbasis (Fastbond ™ 49, 3M Schweiz AG, CH-8803 Rüschlikon) oder auf der Basis eines thermoplastischen Kautschuks (ALFA H 3000/0, ALFA Klebstoffe AG, CH-8454 Buchberg) aufgebracht und die Rohrkörper 11 gegeneinander gedrückt werden.

Die auf diese Weise gebildete Haftverbindung lässt ein Lösen der Rohrkörper 11 der so gebildeten Doppelrohranordnung durch Auseinanderziehen zu, ohne dass die Schutzfolie 14 beschädigt wird. Wenn die vorher mit der Schicht 16 aus Kleber versehenen Umfangsteile 15 nach dem Lösen der Haftverbindung wieder gegeneinander gedrückt werden, besteht die Haftverbindung wieder fort. Die Haftverbindung ist jedoch stark genug, dass sie sich nicht löst, wenn die Isolier-Rohranordnung beispielsweise auf eine Trommel aufgewickelt oder in Ringschlaufen gelegt wird.

## Patentansprüche

1. Isolier-Rohranordnung, bestehend aus wenigstens zwei Rohrkörpern (11), von denen jeder ein flexibles inneres Fluidführungs-Rohr (12) aufweist, das von einer Isolierschicht (13) aus elastomerem oder thermoplastischem Schaumstoff umschlossen ist, wobei um die Isolierschicht (13) eine Schutzfolie (14) aus einem Thermoplast, Elastomer oder Duromer hoher Dichte angeordnet ist, **dadurch gekennzeichnet, dass** die Rohrkörper (11) auf gegenüberliegenden Umfangsteilen (15) ihrer Schutzfolie (14) durch eine Schicht (16) eines Klebers verbunden sind, der ein Lösen der Haftverbindung ermöglicht, ohne dass die Schutzfolie (14) beschädigt wird und der nach einer Lösung der Haftverbindung bei erneutem Kontaktieren der Umfangsteile (15) der vorherigen Haftverbindung eine erneute Haftverbindung herstellt.

2. Rohranordnung nach Anspruch 1, **dadurch gekennzeichnet, dass** der Kleber ein Haftschmelzkleber ist.

3. Rohranordnung nach Anspruch 1 oder 2, **dadurch gekennzeichnet, dass** der Kleber ein Haftschmelzkleber auf Acrylbasis oder ein thermoplastischer Kautschuk auf synthetischer Basis ist.

4. Rohranordnung nach einem der vorhergehenden Ansprüche, **dadurch gekennzeichnet, dass** die Schutzfolie (14) aus Polyethylen besteht.

5. Rohranordnung nach einem der vorhergehenden Ansprüche, **dadurch gekennzeichnet, dass** die Rohrkörper (11) unterschiedliche oder gleiche Außendurchmesser haben.

6. Verfahren zur Herstellung der Isolier-Rohranordnung nach einem der vorhergehenden Ansprüche, bei welchem um jedes von wenigstens zwei kontinuierlich transportierten flexiblen inneren Fluidführungs-Rohren (12) eine Isolierschicht (13) aus einem elastomeren oder thermoplastischen Schaumstoff herumgelegt wird, in dem in Axialrichtung eine Öffnung gebildet wird, die axiale Öffnung zur Zwischenlage eines Heißschmelzklebers zu einem Isolierschlauch geschlossen und zur Bildung eines Rohrkörpers (11) auf den Isolierschlauch eine Schutzfolie (14) aus einem Thermoplast oder Elastomer hoher Dichte aufextrudiert wird, wonach die Rohrkörper (11) unter Zwischenlage einer Schicht (16) eines Klebers zwischen gegenüberliegenden Umfangsteilen (15) gegeneinandergeführt und miteinander längs der Umfangsteile (15) der Schutzfolie (14) haftend verbunden werden, wobei die Haftverbindung durch Voneinanderwegziehen der Rohrkörper (11) ohne Beschädigung der Schutzfolie (14) gelöst und bei erneutem Gegeneinanderdrücken der die vorherige Haftverbindung bildenden Umfangsteile (15) wieder hergestellt wird.

## Claims

1. An insulating pipe assembly, comprising at least two tubular bodies (11), each of which has a flexible inner fluid-conveying pipe (12) which is surrounded by an insulating layer (13) consisting of elastomeric or thermoplastic foamed material, wherein a protective film (14) consisting of a high-density thermoplastic, elastomer or thermosetting plastic is disposed around the insulating layer (13), **characterised in that** on opposite circumferential parts (15) of their protective film (14) the tubular bodies (11) are joined by a layer (16) of an adhesive which enables the adhesive connection to be loosened without the protective film (14) being damaged and which, after loosening of the adhesive connection, establishes a fresh adhesive connection upon renewed contact of the circumferential parts (15) of the previous adhesive connection.

2. A pipe assembly according to Claim 1, **characterised in that** the adhesive is a hot-melt pressure sensitive adhesive.

3. A pipe assembly according to Claim 1 or 2, **characterised in that** the adhesive is a hot-melt pressure sensitive adhesive with an acrylic basis or a thermoplastic rubber with a synthetic basis.

4. A pipe assembly according to any one of the preceding Claims, **characterised in that** the protective film (14) consists of polyethylene.

5. A pipe assembly according to any one of the preceding Claims, **characterised in that** the tubular bodies (11) are of different or the same outer diameter.

6. A method of producing the insulating pipe assembly according to any one of the preceding Claims, in which an insulating layer (13) consisting of elastomeric or thermoplastic foamed material is placed around each of at least two continuously transported flexible inner fluid-conveying pipes (12) and in which an opening is formed in an axial direction, the axial opening is closed to form an insulating sleeve for the interposition of a hot-melt adhesive and to form a tubular body (11) there is extruded on to the insulating sleeve a protective film (14) consisting of a high-density thermoplastic or an elastomer, whereupon the tubular bodies (11) with the interposition of a layer (16) of an adhesive are guided against one another between opposing circumferential parts (16) and are joined together adhesively along the circumferential parts (15) of the protective film (14), the adhesive connection being loosened by pulling the tubular bodies (11) apart without damage to the protective film (14) and being re-established when the circumferential parts (15) forming the previous adhesive connection are again pressed against one another.

## Revendications

1. Agencement de tuyaux isolants, constitué d'au moins deux corps de tuyaux (11), dont chacun est muni d'un tuyau conducteur de fluide (12) flexible interne, qui est enrobé d'une couche isolante (13) en mousse élastomère ou thermoplastique, un film protecteur (14) en matière thermoplastique, élastomère ou thermodurcissable à haute densité étant placé autour de la couche isolante (13), **caractérisé en ce que**, sur des parties périphériques (15) opposées de leur film protecteur (14), les corps de tuyaux (11) sont reliés par une couche (16) d'une colle qui permet de séparer la liaison adhésive sans détériorer le film protecteur (14) et qui après une séparation de la liaison adhésive établit une nouvelle liaison adhésive, lors d'une nouvelle mise en contact des parties périphériques (15) de l'ancienne liaison adhésive.

2. Agencement de tuyaux selon la revendication 1, **caractérisé en ce que** la colle est une colle à fusion adhésive.

3. Agencement de tuyaux selon l'une quelconque des revendications 1 ou 2, **caractérisé en ce que** la colle est une colle à fusion adhésive sur base acrylique ou un caoutchouc thermoplastique sur base synthétique.

4. Agencement de tuyaux selon l'une quelconque des revendications précédentes, **caractérisé en ce que** le film protecteur (14) est en polyéthylène.

5. Agencement de tuyaux selon l'une quelconque des revendications précédentes, **caractérisé en ce que** les corps de tuyaux (11) ont des diamètres extérieurs différents ou identiques.

6. Procédé de fabrication de l'agencement de tuyaux isolants selon l'une quelconque des revendications précédentes, dans lequel une couche isolante (13) en une mousse élastomère ou thermoplastique, dans laquelle une ouverture est conçue en direction axiale, est posée autour de chacun d'au moins deux tuyaux conducteurs de fluide (12) flexibles internes transportés en continu, l'ouverture axiale étant fermée pour former un flexible isolant après insertion d'une colle à fusion adhésive et un film protecteur (14) en matière thermoplastique ou élastomère à haute densité étant extrudé sur le flexible isolant pour former un corps de tuyau (11), suite à quoi les corps de tuyaux (11) sont rapprochés après insertion d'une couche (16) d'une colle entre des parties périphériques (15) opposés et sont reliés entre eux par adhésion le long des parties périphériques (15) du film protecteur (14), la liaison adhésive étant séparée par disjonction des corps de tuyaux (11) sans détériorer le film protecteur (14) et rétablie par pression renouvelée des parties périphériques (15) formant la liaison adhésive précédente l'une contre l'autre.
